# EUROPÄISCHE PATENTSCHRIFT

(11) **EP 4 375 612 B1**
(45) Veröffentlichungstag und Bekanntmachung des Hinweises auf die Patenterteilung: **29.04.2026**
(21) Anmeldenummer: 23209490.4
(22) Anmeldetag: 13.11.2023
(51) Int. Cl.: G01B 5/00, G01B 11/08, G01B 11/10, B24B 5/22, B24B 5/35, B24B 49/12, B24B 51/00

(54) **MESSVORRICHTUNG FÜR SPINNZYLINDER**
MEASURING DEVICE FOR SPINNING CYLINDER
DISPOSITIF DE MESURE POUR CYLINDRE DE FILAGE

(30) Priorität: 25.11.2022 CH 14112022
(43) Veröffentlichungstag der Anmeldung: 29.05.2024
(73) Patentinhaber: Bräcker AG, 8330 Pfäffikon-Zürich (CH)
(72) Erfinder: WIDMER, Felix, 8404 Winterthur (CH); DIPPEL, Markus, 8330 Pfäffikon (CH)
(74) Vertreter: Rieter

(56) Entgegenhaltungen:
- WO-A1-99/13292
- JP-A- 2000 018 923
- BEESLEY R: "SCHLEIFEN VON SPINNZYLINDERBEZUEGEN", MELLIAND TEXTILBERICHTE, DEUTSCHER FACHVERLAG, FRANKFURT AM MAIN, DE, vol. 74, no. 6, 1 June 1993 (1993-06-01), pages 493 - 495, XP000372503, ISSN: 0341-0781

## Beschreibung

Die Erfindung betrifft eine Messvorrichtung zur Messung eines Durchmessers von Spinnzylindern einer Oberwalze von faserverarbeitenden Maschinen.

Spinnzylinder sind in der Regel paarweise drehbar auf einem Achsbolzen zu einer Oberwalze verbaut. In verschiedenen faserverarbeitenden Maschinen wie beispielsweise Strecken, Flyern, Ringspinnmaschinen oder Luftspinnmaschinen werden zur Verstreckung von Faserbändern Streckwerke eingesetzt. Die Streckwerke werden gebildet aus mehreren hintereinander angeordneten und mit unterschiedlichen Drehzahlen betriebenen Walzenpaaren. Dabei wird das zwischen den Walzenpaaren durchlaufende Faserband einem Verzug ausgesetzt. Die Walzenpaare bestehen aus einer Unterwalze und einer Oberwalze, wobei die Unterwalze meist eine Stahlwalze ist und die Oberwalze mit Spinnzylindern versehen ist, welche einen elastischen Bezug aufweisen. Während des Betriebes wird der Bezug durch die durchlaufenden Faserbänder abgenutzt, wobei der Bezug seine zylindrische Form verliert und eine einwandfreie Zusammenarbeit mit der zugehörigen Unterwalze verloren geht. Deshalb müssen die Spinnzylinder, respektive deren Bezüge, periodisch geschliffen werden. Bei diesem Schleifvorgang wird die oberste Schicht des Bezuges abgetragen und die ursprüngliche, beispielsweise zylindrische Form des Bezuges wieder hergestellt.

JP 2000 018923 A zeigt eine Prüfvorrichtung für die Verformung und den äusseren Durchmesser einer Walze oder dergleichen mit einer Laserstrahl-Messeinrichtung.

Die WO 99/13292 A1 eine Messeinrichtung mit einer Halterung, mit der ein Messobjekt in einer durch eine Führung definierten Mittelebene in einer Lage gehalten werden kann. Mit einem Schlitten kann das Messobjekt in den Bereich eines fokussierten Energiestrahls bewegt werden.

Weitere Ansätze zur Messung und zum Schleifen von Spinnzylindern sind aus der Fachpublikation «Schleifen Von Spinnzylinderbezügen» (Melliand Textilberichte, Deutscher Fachverlag, Frankfurt am Main, DE, Bd. 7 4, Nr. 6, 1. Juni 1993, Seiten 493-495) bekannt.

Um einen automatischen, auf die aktuellen geometrischen Abmessungen der zu schleifenden Spinnzylinder abgestimmten, Schleifvorgang zu ermöglichen, ist ein Durchmesser der Spinnzylinder vor dem Schleifvorgang zu bestimmen. Nach dem Stand der Technik wird davon ausgegangen, dass die in einer Maschine eingesetzten Spinnzylinder einem in etwa gleich hohen Verschleiss ausgesetzt sind. Damit wird der Durchmesser eines Spinnzylinders aus dieser Maschine manuell gemessen und anschliessend eine notwendige Schleiftiefe, respektive ein Durchmesser bestimmt, welcher durch den Schleifprozess erreicht werden soll. Entsprechend den Unsicherheiten aus der Messung und dem Betrieb der Maschine wird der zu erreichende Durchmesser festgelegt, welcher mit Sicherheit für alle Spinnzylinder der Maschine zu einem einwandfreien Ergebnis führt. Nachteilig daran ist, dass eine zu hohe Schleiftiefe eingestellt wird und damit die Spinnzylinder auf einen Durchmesser geschliffen werden, welcher bei individueller Betrachtung der Spinnzylinder nicht notwendig wäre. Da ein derartiges Nachschleifen in einem Lebenszyklus der Spinnzylinder mehrfach ausgeführt wird, führt eine zu hohe Schleiftiefe zu einer Verkürzung einer Gebrauchsdauer.

Die Aufgabe der Erfindung ist es demnach eine Vorrichtung zur Messung eines Durchmessers der Spinnzylinder vorzuschlagen, welche eine automatische Messung mit einer hohen Genauigkeit ermöglicht.

Die Aufgabe wird gelöst durch eine Messvorrichtung mit den Merkmalen des unabhängigen Anspruchs. Zur Lösung der Aufgabe wird eine Messvorrichtung zur Messung eines Durchmessers von paarweise auf einem Achsbolzen angeordneten Spinnzylindern einer Oberwalze von faserverarbeitenden Maschinen vorgeschlagen, wobei die Messvorrichtung eine Laserschranke und einen Halter zur Auflage der Oberwalzen und eine Wegmessung und einen Linearantrieb zur Bewegung der Oberwalzen mit dem Halter aufweist. Der Halter weist eine Vertiefung zur Aufnahme des Achsbolzens der Oberwalze auf. Durch eine einfache Vertiefung, beispielsweise in Form eines Dreiecks, wird der Achsbolzen der Oberwalze, und damit auch die Spinnzylinder, in einer definierten Position gegenüber der Laserschranke gehalten. Alternativ zu einer Vertiefung im Halter zur Aufnahme und Positionierung der Oberwalze kann es von Vorteil sein, wenn eine Klemmvorrichtung zur Fixierung der Oberwalze auf dem Halter vorgesehen ist. Eine exakte Positionierung der Oberwalze in einer Höhe ist nicht notwendig, da die Spinnzylinder mit ihrem äusseren Umfang die Laserschranke unterbrechen und somit eine genaue Position des Achsbolzens respektive der Achse unerheblich ist.

Durch den Linearantrieb werden der Halter respektive die darin gehaltene Oberwalze mit den Spinnzylindern an der Laserschranke vorbeibewegt. Dabei ist die Laserschranke derart angeordnet, dass sie aufgrund der Bewegung des Spinnzylinders durch den Spinnzylinder unterbrochen wird. Eine Bestimmung des Durchmessers der Spinnzylinder ist damit aufgrund der Bewegung des Halters mit dem Linearantrieb durch die Laserschranke vorgesehen. Sobald der Spinnzylinder an der Laserschranke vorbei ist, schliesst sich die Laserschranke wieder. Eine durch den Halter zurückgelegte Strecke während einer Zeitdauer eines Unterbruchs der Laserschranke entspricht somit dem Durchmesser des Spinnzylinders. Diese Strecke wird entsprechend durch die vorgesehene Wegmessung erfasst. Laserschranke, Linearantrieb sowie Wegmessung sind in einem Vorrichtungsrahmen ortsfest gehalten. Vorteilhafterweise ist der Halter mit Gleitlagern ausgebildet, auf welchen er ebenfalls im Vorrichtungsrahmen gehalten ist. Der Halter wird durch den Linearantrieb auf den Gleitlagern bewegt. Durch die Verwendung von Gleitlagern ergibt sich eine hohe Wiederholbarkeit und eine ruckfreie Bewegung des Halters.

Alternativ zur Bewegung der Oberwalzen mit dem Halter wird eine Verschiebung der Laserschranke entlang des Halters vorgeschlagen. Anstelle des Halters wird die Laserschranke vom Linearantrieb bewegt und die Verschiebung der Laserschranke entsprechend mit der Wegmessung bestimmt. Die Laserschranke kann dabei auf Gleitlagern im Vorrichtungsrahmen geführt sein.

In einer zur Ausführung mit Gleitlagern alternativen Ausführungsform ist der Halter oder die Laserschranke auf einem Gleitschlitten gelagert, wobei der Gleitschlitten mit dem Linearantrieb verbunden ist. Durch den Gleitschlitten wird eine Stabilisierung der darauf aufgebauten Bauteile, wie Laserschranke oder Halter mit Oberwalze erreicht. Durch die Verwendung eines Gleitschlittens, kann eine Lagerung beispielsweise auf geführten Rollen erfolgen, was einen Reibungswert gegenüber Gleitlagern vermindert.

Bevorzugterweise weist der Linearantrieb einen Drehantrieb und eine Spindel aufweist, wobei der Gleitschlitten über eine Kugelumlaufmutter mit der Spindel spielfrei verbunden und auf Schiebelagern gehalten ist. Die Schiebelager können auf Schienen oder bevorzugterweise auf Lagerstangen geführt werden. Dabei haben Lagerstangen den Vorteil, dass dies von den Schiebelagern umschlossen werden können und derart eine nahezu spielfreie Führung des Gleitschlittens ergeben. Die Ausführung des Linearantriebs als ein Drehantrieb mit einer Spindel hat den Vorteil, dass eine spielfreie Übertragung einer Drehung des Antriebs auf die Spindel erfolgen kann. Eine Umsetzung der drehenden Bewegung der Spindel in eine lineare Bewegung des Gleitschlittens erfolgt über die Kugelumlaufmutter, welche am Gleitschlitten befestigt ist. Kugelumlaufmuttern sind aus dem Stand der Technik bekannt und werden aufgrund ihrer Spielfreiheit in Präzisionsantrieben vielfältig verwendet.

Es ist von Vorteil, wenn die Wegmessung im Drehantrieb integriert ist. Eine hohe Genauigkeit wird beispielsweise durch die Verwendung von Inkrementalgebern erreicht. Dadurch wird einerseits eine hohe Auflösung der Wegmessung erreicht und eine Verschmutzung der Wegmessung vermieden. Da eine Wegmessung nur während des Unterbruchs der Laserschranke aktiv sein muss, ist eine Messung einer zurückgelegten Distanz des Gleitschlittens ausreichend.

Vorteilhafterweise ist für die Bewegung des Halters oder die Verschiebung der Laserschranke eine Messgeschwindigkeit und eine Arbeitsgeschwindigkeit vorgesehen, wobei die Arbeitsgeschwindigkeit ein Mehrfaches der Messgeschwindigkeit beträgt. Ist für eine Be- und Entladung der Messvorrichtung mit den Spinnzylindern nur eine der möglichen Endpositionen des Gleitschlittens oder Halters vorgesehen, ist es von Vorteil, nach einer Messung, möglichst rasch in eine Ausgangsposition zurückzukehren. Werden jedoch die Spinnzylinder in beiden Endpositionen des Gleitschlittens oder Halters in die Messvorrichtung eingebracht, ist eine Messung in beiden Bewegungsrichtungen möglich und somit eine Arbeitsgeschwindigkeit nicht notwendig.

Es hat sich gezeigt, dass mit einer Messgeschwindigkeit von 5 mm bis 20 mm pro Sekunde eine hohe Präzision in der Bewegung der Oberwalzen respektive Spinnzylinder erreicht werden kann. Dabei wird ein Wackeln oder Vibrieren der Messvorrichtung und damit des Vorrichtungsrahmens weitestgehend vermieden und eine hohe Genauigkeit der Messung der Durchmesser erreicht. Bevorzugterweise ist eine Bestimmung des Durchmessers der Spinnzylinder mit einer Genauigkeit von mindestens 0.02 mm vorgesehen. Durch die Messung kann damit eine Angabe des Durchmessers der Spinnzylinder mit einer maximalen Toleranz von plus-minus 0.02 mm erreicht werden. Durch eine Kenntnis des genauen Durchmessers der Spinnzylinder wird ein Schleifen der einzelnen Spinnzylinder mit einer möglichst geringen Schleiftiefe ermöglicht, ohne dass bei einer Vorgabe der Schleiftiefe Sicherheiten eingerechnet werden müssen. Dadurch können die Spinnzylinder mit einer geringeren Schleiftiefe bearbeitet werden und in der Folge auch öfter geschliffen werden, bevor ihr für einen Einsatz betriebsbedingter minimaler Durchmesser erreicht wird. Dies wirkt sich in einer höheren Lebensdauer der Spinnzylinder aus und somit in einer entsprechenden Reduzierung der Betriebskosten der faserverarbeitenden Maschine.

Weiter wird ein Verfahren zur Messung eines Durchmessers von paarweise auf einem Achsbolzen angeordneten Spinnzylindern einer Oberwalze von faserverarbeitenden Maschinen mit einer Messvorrichtung nach obiger Beschreibung vorgeschlagen, wobei die Laserschranke bei der Bewegung der Oberwalze oder einer Verschiebung der Laserschranke durch den Spinnzylinder unterbrochen wird und der Unterbruch der Laserschranke eine Aktivierung und Deaktivierung der Wegmessung auslöst. Dadurch entspricht die während des Unterbruchs der Laserschranke zurückgelegte Strecke des Halters oder der Laserschranke dem aktuellen Durchmesser des Spinnzylinders. In einer Weiterentwicklung des Verfahrens werden bei einer Oberwalze zwei unabhängige Laserschranken eingesetzt, um die beiden Spinnzylinder einer Oberwalze separat ausmessen zu können. Dabei erfolgt die Aktivierung der Wegmessung durch die beiden Laserschranken unabhängig voneinander. Eine derartige Bestimmung der Durchmesser der Spinnzylinder eröffnet die Möglichkeit Oberwalzen deren Spinnzylinder in ihren Durchmessern stark voneinander abweichen auszusortieren und nicht weiter zu verwenden.

Ebenfalls vorgeschlagen wird eine Schleifmaschine zum Schleifen von paarweise auf einem Achsbolzen angeordneten Spinnzylindern einer Oberwalze von faserverarbeitenden Maschinen mit einem Vorlagemagazin und einem Ablagemagazin und einem Bearbeitungsmodul und mit einer Steuerung, wobei das Bearbeitungsmodul eine Schleifvorrichtung mit einer Schleifscheibe und eine Messvorrichtung nach obiger Beschreibung zur Bestimmung eines Durchmessers der Spinnzylinder vor dem Schleifvorgang aufweist. In der Messvorrichtung werden die aktuellen Durchmesser der Spinnzylinder vor dem Schleifen gemessen. Durch eine Messung der Durchmesser können die Oberwalzen respektive deren Spinnzylinder individuell geschliffen werden. Ohne Messvorrichtung würden alle Spinnzylinder auf einen festgelegten Normdurchmesser geschliffen, auch wenn dies nicht bei allen Oberwalzen notwendig wäre oder dazu führen würde, dass ein zu geringer Abtrag einer verschlissenen Oberfläche erreicht würde. In einer ersten Betriebsweise kann dadurch, dass der aktuelle Durchmesser eines zu schleifenden Spinnzylinders bekannt ist, die Schleifscheibe exakt an den Spinnzylinder zugestellt werden, sodass ein möglichst grosser Durchmesser des Spinnzylinders nach dem Schleifen erhalten bleibt. Damit wird eine wesentliche Laufzeitverlängerung der einzelnen Oberwalzen erreicht. Auch ist es nicht notwendig Oberwalzen mit gleicher Betriebsdauer gemeinsam zu schleifen, da eine für eine Erneuerung einer Oberfläche der Spinnzylinder notwendige Schleiftiefe bei jeder in die Schleifposition gelangende Oberwalze individuell eingestellt wird. In einer weiteren Betriebsweise werden die Spinnzylinder auf einen festgelegten Solldurchmesser geschliffen und dadurch, dass der aktuelle Durchmesser eines zu schleifenden Spinnzylinders bekannt ist, kann festgestellt werden, ob eine vorgegebene Schleiftiefe durch den Schleifvorgang erreicht wird.

Bevorzugterweise sind der Linearantrieb und die Wegmessung durch die Steuerung der Schleifmaschine ausgewertet und gesteuert. Dadurch ist einerseits keine separate Steuerung der Messvorrichtung notwendig und andrerseits kann ein gemessener Durchmesser eines Spinnzylinders, ohne Referenzieren über eine Schnittstelle, der sich im Schleifprozess befindlichen Oberwalze zugewiesen werden. Weiter kann bei einem Vorsehen der Messvorrichtung in der Schleifmaschine auf einen Vorrichtungsrahmen verzichtet und die Messvorrichtung in einen Maschinenrahmen der Schleifmaschine integriert werden.

Im Folgenden wird die Erfindung anhand von einer beispielhaften Ausführungsform erklärt und durch die Zeichnung näher erläutert.
- Figur 1: zeigt in schematischer Darstellung eine Oberwalze nach dem Stand der Technik;
- Figur 2: zeigt in schematischer Darstellung eine erste Ausführungsform einer Messvorrichtung;
- Figur 3: zeigt in schematischer Darstellung eine Ansicht in Richtung X nach der Figur 2;
- Figur 4: zeigt in schematischer Darstellung eine zweite Ausführungsform einer Messvorrichtung;
- Figur 5: zeigt in schematischer Darstellung einen Querschnitt an der Stelle Y-Y der Figur 4;
- Figur 6: zeigt in schematischer Darstellung eine dritte Ausführungsform einer Messvorrichtung und
- Figur 7: zeigt in schematischer Darstellung eine Ausführungsform einer Schleifmaschine.

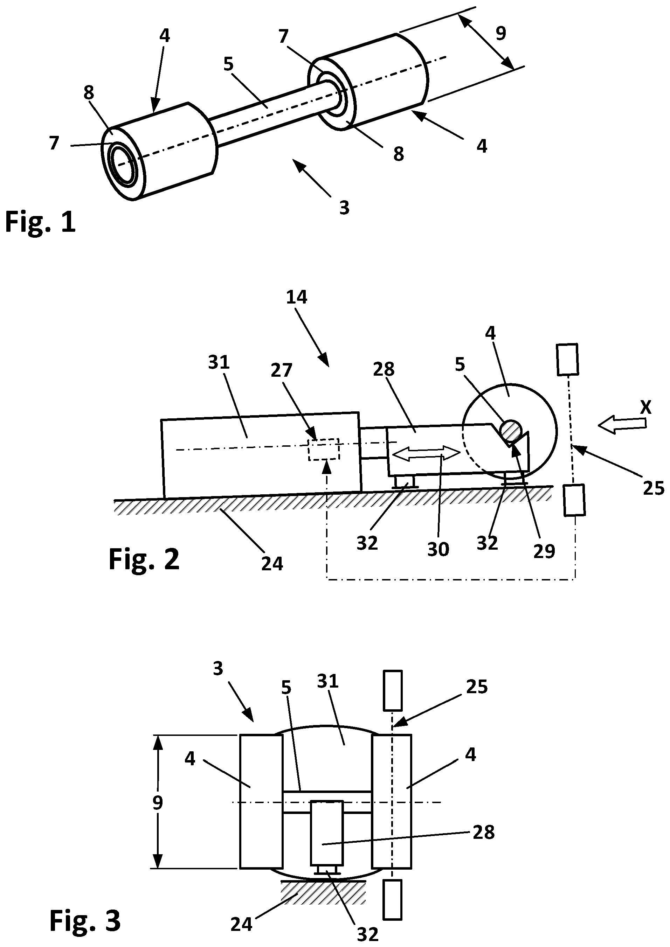

Figur 1 zeigt in schematischer Darstellung eine Oberwalze 3 nach dem Stand der Technik mit zwei Spinnzylindern 4. Die Oberwalze 3 weist einen Achsbolzen 5 mit einer Achse 6 auf, an dessen jeweiligen Enden ein Spinnzylinder 4 gehalten ist. Die Spinnzylinder 4 sind dabei drehbar auf dem Achsbolzen 5 und in Richtung der Achse 6 ortsfest gelagert. Die Spinnzylinder weisen jeweils eine Hülse 7 und einen auf die Hülse 7 aufgetragenen Bezug 8 auf.

Figur 2 zeigt in schematischer Darstellung eine erste Ausführungsform einer Messvorrichtung 14 und Figur 3 in schematischer Darstellung eine Ansicht in Richtung X nach der Figur 2. In einem Vorrichtungsrahmen 24 der Messvorrichtung 14 sind ortsfest eine Laserschranke 25 und ein Linearantrieb 31 gehalten. Im Linearantrieb 31 ist eine Wegmessung 27 vorgesehen. Der Linearantrieb 31 ist mit einem Halter 28 verbunden. Der Halter 28 ist mit Gleitlagern 32 auf dem Vorrichtungsrahmen 24 beweglich abgestützt. Der Halter 24 weist zudem eine Vertiefung 29 auf in welcher eine Oberwalze 3, respektive deren Achsbolzen 5, eingelegt ist. Der am Achsbolzen 6 gehaltene Spinnzylinder 4 wird mit dem Halter 28 durch den Linearantrieb 31 mit der Bewegung 30 durch die Laserschranke 25 bewegt. Dabei ist die Laserschranke 25 derart angeordnet, dass die Laserschranke 25 durch den Spinnzylinder 4 während der Bewegung 30 unterbrochen wird. Eine während des Unterbruchs der Laserschranke 25 zurückgelegte Strecke wird durch die Wegmessung 27 erfasst und damit ein Durchmesser 9 des Spinnzylinders 4 bestimmt.

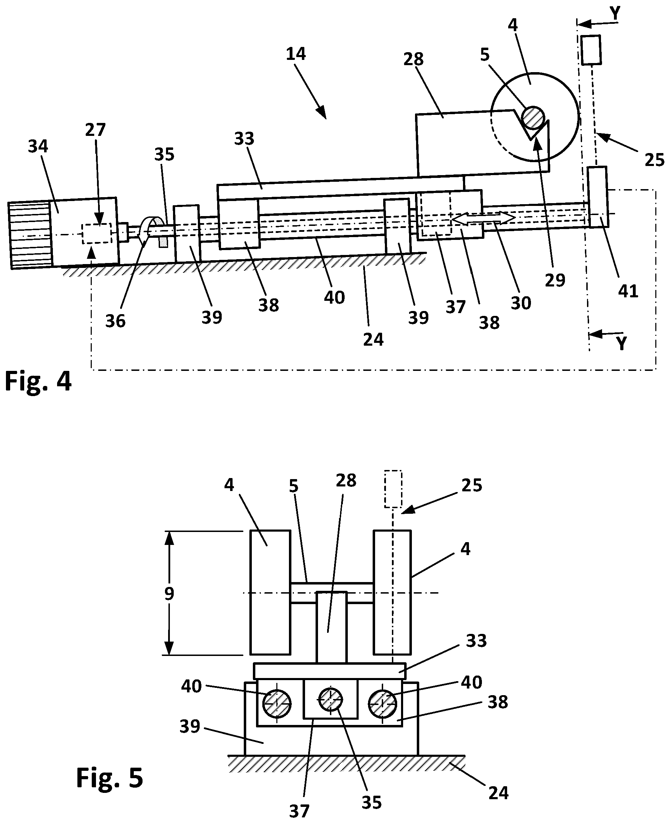

Figur 4 zeigt in schematischer Darstellung eine zweite Ausführungsform einer Messvorrichtung 14 und Figur 5 in schematischer Darstellung einen Querschnitt an der Stelle Y-Y der Figur 4. In einem Vorrichtungsrahmen 24 der Messvorrichtung 14 sind ortsfest eine Laserschranke 25 und ein Linearantrieb gehalten. Der Linearantrieb ist als ein Drehantrieb 34 ausgebildet und weist eine Wegmessung 27 und eine Spindel 35 auf. Die Laserschranke 25 ist an zwei Lagerstangen 40 ortsfest gehalten, wobei die Lagerstangen 40 über zwei Lager 39 am Vorrichtungsrahmen 24 ortsfest befestigt sind. An den Lagerstangen 40 ist auf Schiebelagern 38 ein Gleitschlitten 33 gehalten. Die Spindel 35 durchläuft eine am Gleitschlitten 33 befestigte Kugelumlaufmutter 37. Durch eine Drehung 36 der Spindel 35 führt die Kugelumlaufmutter 37 und damit der Gleitschlitten 33 mit den Schiebelagern 38 auf den Lagerstangen 40 relativ zur Laserschranke 25 die lineare Bewegung 30 aus. Auf der Gleitplatte 33 ist ein Halter 28 befestigt. Der Halter 24 weist eine Vertiefung 29 auf in welcher eine Oberwalze 3, respektive deren Achsbolzen 5, eingelegt ist. Der am Achsbolzen 6 gehaltene Spinnzylinder 4 wird mit dem Halter 28 und der Gleitplatte 33 durch den Drehantrieb 34 mit der Bewegung 30 durch die Laserschranke 25 bewegt. Dabei ist die Laserschranke 25 derart angeordnet, dass die Laserschranke 25 durch den Spinnzylinder 4 während der Bewegung 30 unterbrochen wird. Eine während des Unterbruchs der Laserschranke 25 zurückgelegte Strecke wird durch die Wegmessung 27 erfasst und damit ein Durchmesser 9 des Spinnzylinders 4 bestimmt.

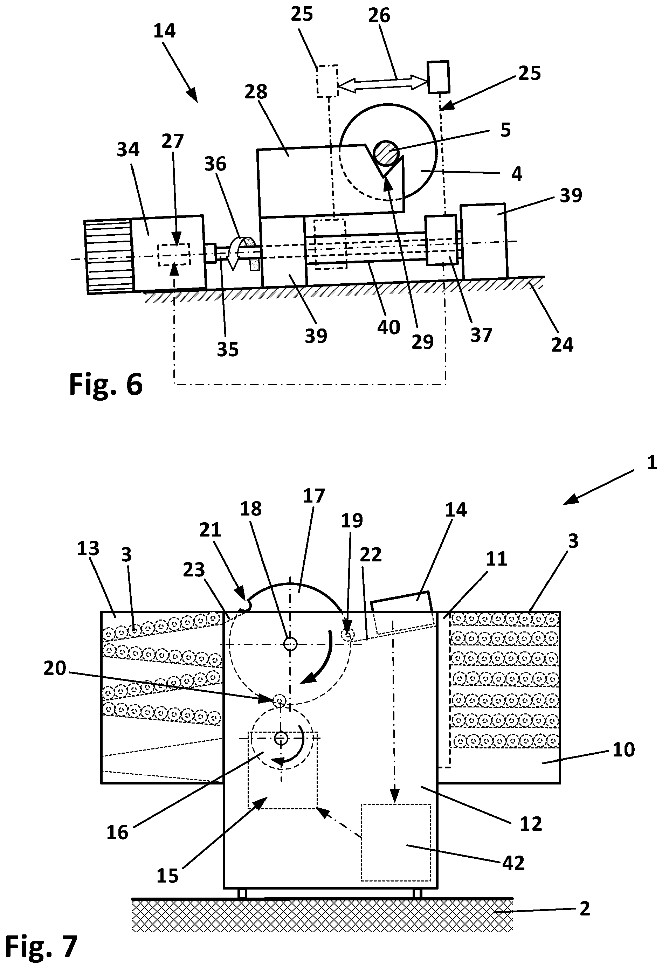

Figur 6 zeigt in schematischer Darstellung eine dritte Ausführungsform einer Messvorrichtung 14. In einem Vorrichtungsrahmen 24 der Messvorrichtung 14 sind ortsfest eine Laserschranke 25 und ein Linearantrieb gehalten. Der Linearantrieb ist als ein Drehantrieb 34 ausgebildet und weist eine Wegmessung 27 und eine Spindel 35 auf. Der Halter 28 ist ebenfalls auf dem Vorrichtungsrahmen 24 ortsfest gehalten. Über Lager 39 sind Lagerstangen 40 am Vorrichtungsrahmen 24 ortsfest gehalten. An den Lagerstangen 40 ist eine Kugelumlaufmutter 37 verschieblich gehalten. An der Kugelumlaufmutter 37 ist eine Laserschranke 25 befestigt. Die Spindel 35 ist in den Lagern 39 drehbar gehalten und durchläuft die Kugelumlaufmutter 37. Durch eine Drehung 36 der Spindel 35 führt die Kugelumlaufmutter 37 und damit die Laserschranke 25 auf den Lagerstangen 40 relativ zum Halter 28 die lineare Verschiebung 26 aus. Der Halter 24 weist eine Vertiefung 29 auf in welcher eine Oberwalze 3, respektive deren Achsbolzen 5, eingelegt ist. Die Laserschranke 25 wird durch den Drehantrieb 34 und die Spindel 35 mit der Verschiebung 26 am Spinnzylinder 4 vorbei bewegt. Dabei ist die Laserschranke 25 derart angeordnet, dass die Laserschranke 25 durch den Spinnzylinder 4 während der Verschiebung 26 unterbrochen wird. Eine während des Unterbruchs der Laserschranke 25 zurückgelegte Strecke wird durch die Wegmessung 27 erfasst und damit ein Durchmesser des Spinnzylinders 4 bestimmt.

Figur 7 zeigt in schematischer Darstellung eine Ausführungsform einer Schleifmaschine 1 mit einer Messvorrichtung 14. Die Schleifmaschine 1 weist beispielhaft ein Vorlagemagazin 10, ein Bearbeitungsmodul 12 und einem Abgabemagazin 13 auf. Die Schleifmaschine 1 ist mit dem Bearbeitungsmodul 12 auf einem Fundament 2 aufgebaut und das Vorlagemagazin 10 und das Abgabemagazin 13 sind an das Bearbeitungsmodul 12 angebaut. Im Vorlagemagazin 10 sind zu schleifende Oberwalzen 3 in mehreren Etagen vorgehalten. Das Bearbeitungsmodul 12 ist in einer beispielhaften Ausführung mit einem auf einer Drehachse 18 gehaltenen Revolver 17 gezeigt. Der 17 Revolver dient der Aufnahme und dem Transport der Oberwalzen 3 durch das Bearbeitungsmodul 12. Weiter ist im Bearbeitungsmodul 12 eine Steuerung 42 und eine Schleifvorrichtung 15 mit einer Schleifscheibe 16 vorgesehen. Aus den einzelnen Etagen des Vorlagemagazins 10 werden die Oberwalzen 3 mit einer Hebevorrichtung 11 zur Messvorrichtung 14 und anschliessend zu einer Übergabeführung 22 gebracht. Die Oberwalzen 3 durchlaufen die Messvorrichtung 14, in welcher ein Durchmesser der Spinnzylinder der Oberwalzen 3 gemessen wird. Über die Übergabeführung 22 gelangen die Oberwalzen 3 in eine Übernahmeposition 19. In der Übernahmeposition 19 wird die Oberwalze 3 vom Revolver 17 übernommen. Der Revolver 17 wird um 120 Winkelgrade gedreht und die übernommene Oberwalze 3 erreicht die Schleifposition 20. Entsprechend dem gemessenen Durchmesser des Spinnzylinders wird durch die Steuerung 42 eine Zustellung der Schleifscheibe 16 vorgenommen und der Spinnzylinder geschliffen. Nach einer weiteren Drehung des Revolvers 17 um 120 Winkelgrade erreicht die Oberwalze 3 eine Abgabeposition 21. In der Abgabeposition 21 wird die Oberwalze 3 aus dem Revolver 17 freigegeben und erreicht über eine Abgabeführung 23 das Abgabemagazin 13. Das Abgabemagazin 13 ist in der gezeigten Ausführung beispielhaft als ein Rechteckmagazin dargestellt.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Legende

- 1: Schleifmaschine
- 2: Fundament
- 3: Oberwalze
- 4: Spinnzylinder
- 5: Achsbolzen
- 6: Achse
- 7: Hülse
- 8: Bezug
- 9: Durchmesser Spinnzylinder
- 10: Vorlagemagazin
- 11: Hebevorrichtung
- 12: Bearbeitungsmodul
- 13: Abgabemagazin
- 14: Messvorrichtung
- 15: Schleifvorrichtung
- 16: Schleifscheibe
- 17: Revolver
- 18: Drehachse
- 19: Übernahmeposition
- 20: Schleifposition
- 21: Abgabeposition
- 22: Übergabeführung
- 23: Abgabeführung
- 24: Vorrichtungsrahmen
- 25: Laserschranke
- 26: Verschiebung der Laserschranke
- 27: Wegmessung
- 28: Halter
- 29: Vertiefung
- 30: Bewegung des Halters
- 31: Linearantrieb
- 32: Gleitlager
- 33: Gleitschlitten
- 34: Drehantrieb
- 35: Spindel
- 36: Drehung Spindel
- 37: Kugelumlaufmutter
- 38: Schiebelager
- 39: Lager
- 40: Lagerstangen
- 41: Endstück
- 42: Steuerung

## Patentansprüche

1. Messvorrichtung (14) zur Messung eines Durchmessers (9) von paarweise auf einem Achsbolzen (5) angeordneten Spinnzylindern (4) einer Oberwalze (3) von faserverarbeitenden Maschinen, wobei die Messvorrichtung (14) eine Laserschranke (25) und einen Halter (28) zur Auflage der Oberwalzen (3) aufweist, **dadurch gekennzeichnet, dass** die Messvorrichtung eine Wegmessung (27) und einen Linearantrieb (31) zur Bewegung (30) der Oberwalzen (3) mit dem Halter (28) an der Laserschranke vorbei oder zur Verschiebung (26) der Laserschranke (25) entlang des Halters (28) aufweist, wobei der Halter (28) eine Vertiefung (29) zur Aufnahme des Achsbolzens (5) der Oberwalze (3) aufweist oder eine Klemmvorrichtung zur Fixierung der Oberwalze (3) auf dem Halter (28) aufweist, und dass die Messvorrichtung zur Bestimmung des Durchmessers (9) der Spinnzylinder (4) aufgrund der Bewegung (30) des Halters (28) oder der Verschiebung (26) der Laserschranke (25) mit dem Linearantrieb (31) durch die Laserschranke (25), basierend auf einer durch die Wegmessung gemessenen Strecke, die durch den Halter oder durch die Laserschranke zurückgelegt wird eingerichtet ist.

2. Messvorrichtung (14) nach Anspruch 1, **dadurch gekennzeichnet, dass** der Halter (28) mit Gleitlagern (32) ausgebildet ist.

3. Messvorrichtung (14) nach Anspruch 1, **dadurch gekennzeichnet, dass** der Halter (28) oder die Laserschranke (25) auf einem Gleitschlitten (33) gelagert ist, wobei der Gleitschlitten (33) mit dem Linearantrieb (31) verbunden ist.

4. Messvorrichtung (14) nach Anspruch 3, **dadurch gekennzeichnet, dass** der Linearantrieb (31) einen Drehantrieb (34) und eine Spindel (35) aufweist, wobei der Gleitschlitten (33) über eine Kugelumlaufmutter (37) mit der Spindel (35) spielfrei verbunden und auf Schiebelagern (38) gehalten ist.

5. Messvorrichtung (14) nach Anspruch 4, **dadurch gekennzeichnet, dass** die Wegmessung (27) im Drehantrieb (34) integriert ist.

6. Messvorrichtung (14) nach zumindest einem der vorangehenden Ansprüche, **dadurch gekennzeichnet, dass** für die Bewegung (30) des Halters (28) oder die Verschiebung (26) der Laserschranke (25) eine Messgeschwindigkeit und eine Arbeitsgeschwindigkeit vorgesehen ist, wobei die Arbeitsgeschwindigkeit ein Mehrfaches der Messgeschwindigkeit beträgt.

7. Messvorrichtung (14) nach Anspruch 6, **dadurch gekennzeichnet, dass** die Messgeschwindigkeit 5 mm bis 20 mm pro Sekunde beträgt.

8. Messvorrichtung (14) nach zumindest einem der vorangehenden Ansprüche, **dadurch gekennzeichnet, dass** eine Bestimmung des Durchmessers (9) der Spinnzylinder (4) mit einer Genauigkeit von 0.02 mm vorgesehen ist.

9. Verfahren zur Messung eines Durchmessers (9) von paarweise auf einem Achsbolzen (5) angeordneten Spinnzylindern (4) einer Oberwalze (3) von faserverarbeitenden Maschinen mit einer Messvorrichtung (14) nach zumindest einem der vorangehenden Ansprüche, **dadurch gekennzeichnet, dass** die Laserschranke (25) bei der Bewegung (30) der Oberwalze (3) oder einer Verschiebung (26) der Laserschranke (25) durch den Spinnzylinder (4) unterbrochen wird und der Unterbruch der Laserschranke (25) eine Aktivierung und Deaktivierung der Wegmessung (27) auslöst.

10. Schleifmaschine (1) zum Schleifen von paarweise auf einem Achsbolzen (5) angeordneten Spinnzylindern (4) einer Oberwalze (3) von faserverarbeitenden Maschinen mit einem Vorlagemagazin (10) und einem Ablagemagazin (13) und einem Bearbeitungsmodul (12) und mit einer Steuerung (42), **dadurch gekennzeichnet, dass**.das Bearbeitungsmodul (12) eine Schleifvorrichtung (15) mit einer Schleifscheibe (16) und eine Messvorrichtung (14) nach zumindest einem der Ansprüche 1 bis 8 zur Bestimmung eines Durchmessers (9) der Spinnzylinder (4) vor einem Schleifvorgang aufweist.

11. Schleifmaschine (1) nach Anspruch 10, **dadurch gekennzeichnet, dass** der Linearantrieb (31) und die Wegmessung (27) durch die Steuerung (42) der Schleifmaschine (1) ausgewertet und gesteuert sind.

## Claims

1. Measuring device (14) for measuring a diameter (9) of spinning cylinders (4) of a top roller (3) of fiber-processing machines, which spinning cylinders are arranged in pairs on an axle pin (5), wherein the measuring device (14) has a laser barrier (25) and a holder (28) for supporting the top rollers (3),
**characterized in that** the measuring device has a distance measuring means (27) and a linear drive (31) for moving (30) the top rollers (3) together with the holder (28) past the laser barrier or for displacing (26) the laser barrier (25) along the holder (28), wherein the holder (28) has a depression (29) for receiving the axle pin (5) of the top roller (3), or a clamping device for fixing the top roller (3) to the holder (28), and **in that** the measuring device is designed to determine the diameter (9) of the spinning cylinders (4) on the basis of the movement (30) of the holder (28) or the displacement (26) of the laser barrier (25) by the linear drive (31), by means of the laser barrier (25), based on a distance covered by the holder or by the laser barrier, which distance is measured by the distance measuring means.

2. Measuring device (14) according to claim 1, **characterized in that** the holder (28) is formed having plain bearings (32).

3. Measuring device (14) according to claim 1, **characterized in that** the holder (28) or the laser barrier (25) is mounted on a sliding carriage (33), wherein the sliding carriage (33) is connected to the linear drive (31).

4. Measuring device (14) according to claim 3, **characterized in that** the linear drive (31) has a rotary drive (34) and a spindle (35), wherein the sliding carriage (33) is connected to the spindle (35) without play via a ball nut (37) and is held on sliding bearings (38).

5. Measuring device (14) according to claim 4, **characterized in that** the distance measuring means (27) is integrated into the rotary drive (34).

6. Measuring device (14) according to at least one of the preceding claims, **characterized in that** a measuring speed and a working speed are provided for the movement (30) of the holder (28) or the displacement (26) of the laser barrier (25), wherein the working speed is a multiple of the measuring speed.

7. Measuring device (14) according to claim 6, **characterized in that** the measuring speed is 5 mm to 20 mm per second.

8. Measuring device (14) according to at least one of the preceding claims, **characterized in that** a determination of the diameter (9) of the spinning cylinders (4) with an accuracy of 0.02 mm is provided.

9. Method for measuring a diameter (9) of spinning cylinders (4) of a top roller (3) of fiber-processing machines, which spinning cylinders are arranged in pairs on an axle pin (5), with a measuring device (14) according to at least one of the preceding claims, **characterized in that** the laser barrier (25) is interrupted by the spinning cylinder (4) during the movement (30) of the top roller (3) or a displacement (26) of the laser barrier (25), and the interruption of the laser barrier (25) triggers an activation and deactivation of the distance measuring means (27).

10. Grinding machine (1) for grinding spinning cylinders (4) of a top roller (3) of fiber-processing machines, which spinning cylinders are arranged in pairs on an axle pin (5), comprising a supply magazine (10) and a discharge magazine (13) and a processing module (12) and comprising a controller (42),
**characterized in that** the processing module (12) has a grinding device (15) having a grinding wheel (16), and a measuring device (14) according to at least one of claims 1 to 8 for determining a diameter (9) of the spinning cylinders (4) prior to a grinding operation.

11. Grinding machine (1) according to claim 10, **characterized in that** the linear drive (31) and the distance measuring means (27) are evaluated and controlled by the controller (42) of the grinding machine (1).

## Revendications

1. Dispositif de mesure (14) pour la mesure d'un diamètre (9) de cylindres de filage (4), disposés par paires sur un boulon formant axe (5), d'un rouleau supérieur (3) de machines de traitement de fibres, dans lequel le dispositif de mesure (14) présente une barrière laser (25) et un élément de maintien (28) pour l'appui des rouleaux supérieurs (3), **caractérisé en ce que** le dispositif de mesure présente une mesure de course (27) et un entraînement linéaire (31) pour le déplacement (30) des rouleaux supérieurs (3) avec l'élément de maintien (28) devant la barrière laser ou pour le coulissement (26) de la barrière laser (25) le long de l'élément de maintien (28), dans lequel l'élément de maintien (28) présente un renfoncement (29) pour le logement du boulon formant axe (5) du rouleau supérieur (3) ou présente un dispositif de serrage pour la fixation du rouleau supérieur (3) sur l'élément de maintien (28), **et en ce que** le dispositif de mesure est configuré pour déterminer le diamètre (9) des cylindres de filage (4) sur la base du déplacement (30) de l'élément de maintien (28) ou du coulissement (26) de la barrière laser (25) avec l'entraînement linéaire (31) par la barrière laser (25), sur la base d'une distance mesurée par la mesure de course qui est parcourue par l'élément de maintien ou par la barrière laser.

2. Dispositif de mesure (14) selon la revendication 1, **caractérisé en ce que** l'élément de maintien (28) est réalisé avec des paliers lisses (32).

3. Dispositif de mesure (14) selon la revendication 1,
**caractérisé en ce que** l'élément de maintien (28) ou la barrière laser (25) est monté sur un chariot coulissant (33), dans lequel le chariot coulissant (33) est relié à l'entraînement linéaire (31).

4. Dispositif de mesure (14) selon la revendication 3,
**caractérisé en ce que** l'entraînement linéaire (31) présente un entraînement rotatif (34) et une broche (35), dans lequel le chariot coulissant (33) est relié sans jeu à la broche (35) et est maintenu sur des paliers coulissants (38) par l'intermédiaire d'un écrou à circulation de billes (37).

5. Dispositif de mesure (14) selon la revendication 4, **caractérisé en ce que** la mesure de course (27) est intégrée dans l'entraînement rotatif (34).

6. Dispositif de mesure (14) selon au moins l'une des revendications précédentes, **caractérisé en ce qu'**une vitesse de mesure et une vitesse de travail sont prévues pour le déplacement (30) de l'élément de maintien (28) ou le coulissement (26) de la barrière laser (25), dans lequel la vitesse de travail est un multiple de la vitesse de mesure.

7. Dispositif de mesure (14) selon la revendication 6,
**caractérisé en ce que** la vitesse de mesure est de 5 mm à 20 mm par seconde.

8. Dispositif de mesure (14) selon au moins l'une des revendications précédentes, **caractérisé en ce qu'**une détermination du diamètre (9) des cylindres de filage (4) est prévue avec une précision de 0,02 mm.

9. Procédé pour la mesure d'un diamètre (9) de cylindres de filage (4), disposés par paires sur un boulon formant axe (5), d'un rouleau supérieur (3) de machines de traitement de fibres comportant un dispositif de mesure (14) selon au moins l'une des revendications précédentes, **caractérisé en ce que** la barrière laser (25) est interrompue lors du déplacement (30) du rouleau supérieur (3) ou d'un coulissement (26) de la barrière laser (25) par le cylindre de filage (4) et l'interruption de la barrière laser (25) déclenche une activation et une désactivation de la mesure de course (27).

10. Rectifieuse (1) pour la rectification de cylindres de filage (4), disposés par paires sur un boulon formant axe (5), d'un rouleau supérieur (3) de machines de traitement de fibres, comportant un magasin de réception (10) et un magasin de dépôt (13) et un module de traitement (12) et comportant un dispositif de commande (42), **caractérisée en ce que** le module de traitement (12) présente un dispositif de rectification (15) comportant une meule (16) et un dispositif de mesure (14) selon au moins l'une des revendications 1 à 8 pour la détermination d'un diamètre (9) des cylindres de filage (4) avant un processus de rectification.

11. Rectifieuse (1) selon la revendication 10, **caractérisée en ce que** l'entraînement linéaire (31) et la mesure de course (27) sont évalués et commandés par le dispositif de commande (42) de la rectifieuse (1).
